# EUROPEAN PATENT APPLICATION

(11) **EP 1 018 853 A1**
(43) Date of publication of application: **12.07.2000**
(21) Application number: 99500257.3
(22) Date of filing: 29.12.1999
(51) Int. Cl.: H04Q 11/04

(54) **Integrated circuit for extraction and addition of traffic in asynchronous transfer mode**

(30) Priority: 30.12.1998 ES 9802714
(71) Applicant: Telefonica, S.A., 28013 Madrid (ES)
(72) Inventor: Riesco Prieto, Jacobo, 28028 Madrid (ES); Diaz Garcia, Juan Carlos, 28028 Madrid (ES); Merayo Fernandez, Luis Antonio, 28028 Madrid (ES); Conesa Lareo, Jose Luis, 28028 Madrid (ES)
(74) Representative: Carpintero Lopez, Francisco

(57) **Abstract**

The integrated circuit (1) for extraction and addition of traffic in Asynchronous Transfer Mode (ATM) allows interconnection of high rate (2.5Gbit/s) ATM communications systems. It can be configured in multiplexor mode to add low rate (up to 622Mbit/s) ATM traffic channels from an external source to a common high rate (2.5Gbit/s) ATM flow or link, or in demultiplexor mode to extract low rate ATM traffic channels to an external receiver of a high rate traffic flow. In addition it performs other functions in both modes, such as statistical measurements on ATM flows to detect traffic characteristics and information losses, transmission quality control and alarm generation.

## Description

### OBJECT OF THE INVENTION

The present invention relates to a specific application integrated circuit (AMDA, ASIC Multiplexor Demultiplexor ATM) which operates as a traffic multiplexor or demultiplexor in ATM (Asynchronous Transfer Mode) wide band communications systems. Its purpose is to concentrate or distribute traffic in each input or output of a high-rate ATM switch or at each node of a wide band metropolitan/local area network.

The purpose of this invention is to optimise network resources provided by ATM wide band technology; in addition, the algorithm for multiplexing control which is implemented distributes the total transmission capability of the network evenly among the nodes which assemble traffic, which makes it ideally suited for metropolitan/local area networks.

In addition it performs other functions such as selective discarding of low rate traffic by statistics of ATM flows in order to detect traffic characteristics and data losses, controlling transmission quality (parity) and generation of external alarms. Programming and management functions of the statistical data are carried out and performed by an interface to an external microprocessor.

This invention is of application in the field of telecommunication, more specifically in systems using wide band asynchronous traffic mode (ATM) whether they are high-rate switching nodes, local networks, etc.

### BACKGROUND OF THE INVENTION AND ABSTRACT

One of the main advantages of ATM networks is their ability to more efficiently employ communications channels by statistical multiplexing of Variable Binary Rate (VBR) sources or bursts traffic sources, as long as enough unrelated sources are multiplexed or mixed.

While in a network based on a synchronous transfer mode or with Constant Binary Rate (CBR) the total bandwidth required is equal to the sum of the peak rates of all sources, in an ATM network each source on average is provided with a part of the total channel bandwidth which is smaller than its peak rate. This average bandwidth per source is determined as a function of the acceptable traffic loss rate, which is given by the probability that the traffic assembled by all VBR or burst traffic sources multiplexed on a common link exceed the total capacity of said link. This probability decreases as the number of sources increases or the link rate decreases, and thus, the greater the link rate the greater the gain obtained by the statistical multiplexing.

in order to take advantage of these benefits, a device must be available to multiplex traffic channels on very high rate links, as well as to extract assembled channels towards their destination.

Units are known which microprocessor/dm channels of up to 155 Mbit/s on a 622 Mbit/s link. Multiplexing is performed by time division, so that a maximum of four 155 Mbit/s channels can be multiplexed on a 622 Mbit/s link, and control is centralised so that all sources must be physically near. In the present no units are known which operate at a greater rate or with a distributed control.

Also known are units which can assemble traffic to a channel controlled by a microprocessor. The main problem with these units is that as there is no common control, whether central or distributed, the channel bandwidth is not distributed evenly. Each unit assembles its traffic when it can in the unoccupied bandwidth of the channel. In this way nodes located at the start of the link are much likelier to assemble traffic than those at the ends of the link.

The present invention, the AMDA (ASIC Multiplexor Demultiplexor ATM) multiplexes channels of up to 622 Mbit/s on a 2.5 Gbit/s link, with distributed channel access control, allowing scalability and traffic sources to be located at distant sites. The control algorithm implemented distributes the total channel bandwidth of the link evenly. It has two traffic queues (for high and low priority traffic) which allows storing data arriving from sources until the time when they are inserted in the link. With these properties, up to 16 traffic sources in bursts of 800 Mbit/s peak rate (total peak rate 12.8 Gbit/s) and 133 Mbit/s average rate (total average rate 2.1 Gbit/s) could be multiplexed with a traffic loss rate smaller than 10⁻⁹.

Therefore, the present invention relates to a specific application integrated circuit, the AMDA, for extraction and addition of ATM traffic channels of up to 622Mbit/s in a high capacity link (2.5 Gbit/s).

ATM data are transmitted bundled as constant sized cells, according to recommendations UIT-T 1.361 of the International Telecommunication Union (UIT-T) and UTOPIA Level 1, Version 2.01 of the ATM Forum. Each cell contains a header with information on the channel or connection to which it belongs, with as many as 8192 different connections identifiable in the AMDA, connections which can be high or low priority (prioritary or ordinary). The transmission link is divided into cell intervals, which are identified by an explicit cell start signal. Each cell interval of the link may contain data of a channel or be empty, which is indicated by a given codification of the cell header (according to recommendation UIT-T 1.361). Empty cells or intervals may be used to introduce data on a connection; likewise, a cell may be deleted from a link generating a new hole or empty cell by only changing its header for the header which corresponds to empty cells.

For traffic insertion or addition, the main aspect to consider is the control mechanism for access to the shared link, which will be described further below, based on a new algorithm for control of access to the shared medium, which is distributed and expandable so that traffic sources may be physically distant and the number of sources is only limited by the capacity of the link. Additionally, the total link bandwidth is distributed evenly. A queue organised memory is also required in which source data are stored until they can be assembled in the link. Furthermore, low rate incoming cells must be identified in order to determine whether they are ordinary or priority.

In extraction of link traffic channels the aspects to consider are identification, filtering and extraction of incoming cells, and adaptation also by means of traffic queues of the link and receiver rates.

The AMDA integrated circuit can perform one of the two functions in a programmable manner, by means of an internal log accessible by an interface with a microprocessor, but not both simultaneously.

The control algorithm for access to the medium is in charge of arbitrating, when the AMDA is operating as a multiplexor, which of the multiplexors replaces at each moment one of the empty cells of the high rate link by a cell arriving from its low rate link.

Multiplexors receive ATM cells at their low rate input and determine to which connection they belong by their header. Using a channel programming table, the channel is identified as low priority, or ordinary, or high priority, or prioritary., storing the cell in the corresponding queue. The AMDA can handle up to 8192 connections.

When a complete ATM cell is stored in a queue an access request is generated, ordinary or prioritary, which is sent to the preceding multiplexors (in the direction of transmission flow of the high sped link) so that they allow an empty cell to pass and so the cell can be inserted in the queue. In turn, it will receive access request from the multiplexors after it and must allow empty cells to pass for these.

Below is described how these processes are managed by an implementation of the ADAM algorithm (Distributed Algorithm for Access to a Common medium) with two priority levels. This distributed control algorithm minimises queue sizes independently from the position of the multiplexors in the link. In order to implement the algorithm the following data structures are employed:
- Cell storage queues and access requests: all cells arriving from the low rate input are stored in a memory which s compartmentalised into 512 bit blocks, each of which can store a full cell. The circuit can maintain a maximum of 16384 cells in its queues. In turn, the memory is divided into two sections, one for prioritary cells and one for ordinary cells, so that two cell queues exist. With each cell is stored the value of the corresponding access request counter.
- Access request counters: two 16 bit counters, ordinary and prioritary, which count the number of incoming access requests (arriving from the following multiplexors) not attended between every two low rate cells. Basically, counters increase with each incoming access request and decrease if there are no cells in the queues (the node is in resting state) with each empty cell transmitted through the high-rate link. The ordinary request counter only decreases if the prioritary one is at zero, so that prioritary requests are dealt with before ordinary ones, and if the multiplexor saturation signal is not activated. When a new cell arrives the value of the corresponding counter is stored with the cell and said counter is started at its initial value, zero. Counters stop decreasing when they are at zero since they cannot contain negative values.
- Countdown counters: two 16 bit counters, ordinary and prioritary, which count the number of empty cells which must be allowed through the high rate link before inserting the cell which is in first place of the ordinary or prioritary queue. When there is a cell in either queue (active status) the corresponding countdown counter is loaded with the value of the request access counter stored with the cell in first place in the queue, and decreases with every empty cell which is received by the high rate link. The empty cell is allowed to pass, and is transmitted through the high rate output. When the counter is at zero the following empty cell received is replaced with the first cell of the queue and the counter is reloaded with the value corresponding to the following cell if one exists. The ordinary counter only decreases when the prioritary one is at zero, so that prioritary cells are transmitted before ordinary ones and the outstanding prioritary requests counter is at zero, so that if there are prioritary cells in other nodes, empty cells are allowed to pass for these before inserting the ordinary cells, in addition, there must not be saturation. These counters are started at zero and stop decreasing when they arrive at this value as they cannot contain negative values.
- Outstanding request counters: two 16 bit counters, ordinary and prioritary, which count the number of access requests yet to be transmitted to the preceding multiplexors. The counters, which are initially at zero, increase with each cell received at the low rate link and with each incoming request, and decrease with each outgoing request. Counters stop decreasing when they are at zero as they cannot contain negative values either. Both incoming and outgoing requests are generated in fixed time intervals; one request as a minimum and seven as a maximum with each high rate cell interval.

In addition, when the AMDA circuit operates as an ATM demultiplexor, it must be determined which cells arriving at the high rate link must be extracted to the low rate output, and whether the extracted cells must in turn be transmitted by the high rate cell output (multidestination cells) or be replaced by empty cells. In order to determine the cell destination their header is examined and it is determined which connection they belong to. By a channel programming table it is decided whether the cell must be extracted or transmitted and its priority. The AMDA can handle up to 8192 connections.

Cell bursts directed at a demultiplexor may appear at the high rate channel, which must the demultiplexor must output through the low rate output at a lower rate. In order to decouple the high rate input and low rate output rates it contains a pair of queues where incoming cells are written, depending on their priority (ordinary or prioritary) and read at the appropriate rate, so that no cells are lost. Prioritary cells are extracted to the receiver before the ordinary ones, i.e., while there are cells in the prioritary queue the ordinary queue cells are not read.

Cell storage queues, as in the multiplexor mode, are implemented in a memory which is divided into two sections, one for prioritary cells and another for ordinary cells. The size of each division can be programmed by registers accessible through the microprocessor interface. When there is saturation of the ordinary cell queue of a multiplexor, i.e. the number of cells stored in the ordinary queue reaches a threshold level programmable by the microprocessor interface, a signal is generated which informs the link multiplexors to stop inserting non prioritary cells, thus avoiding queue overflow. The saturation signal acts preventing the decrease of the ordinary countdown and access request counters. As the former is not decreased it will never reach zero, and thus the multiplexors will not insert ordinary cells. Disabling the access request counter decrease is necessary because, since multiplexors do not replace empty cells with ordinary ones, although empty cells are transmitted requests are not dealt with and therefore the counter cannot decrease.

### BRIEF DESCRIPTION OF THE DRAWINGS

Further features and advantages of the invention will become apparent in view of the detailed description which follows of a preferred embodiment of the same, for purposes of illustration only and not intended as a definition of the limits of the invention, made with reference to the attached drawings in which:

Figure 1 shows the block diagram for the specific application integrated circuit for extraction and addition of traffic in asynchronous transfer mode, AMDA (ASIC Multiplexor Demultiplexor ATM).

Figure 2 shows the network configuration for several interconnected nodes, each of which comprises two AMDA's one operating as a multiplexor and one as a demultiplexor.

### DESCRIPTION OF A PREFERRED EMBODIMENT

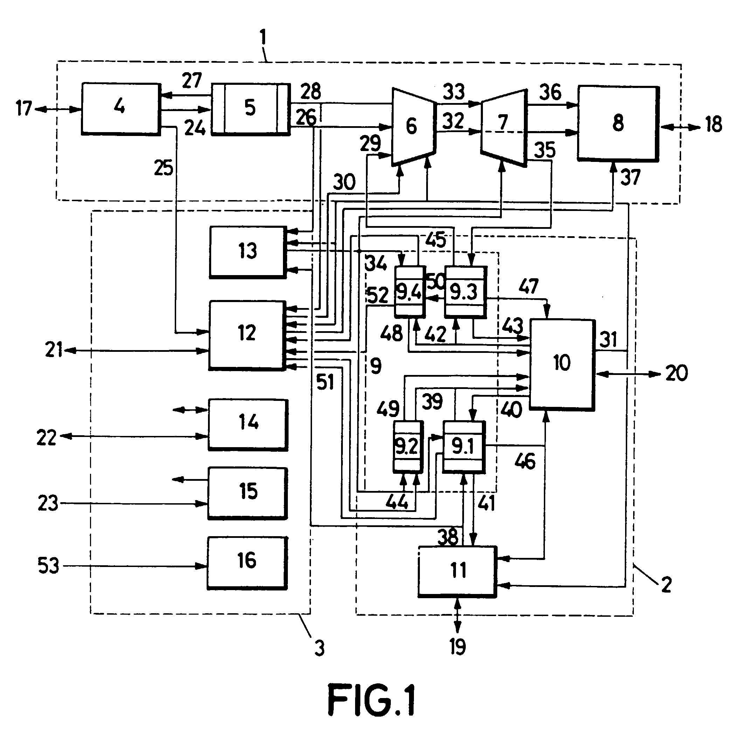

The detailed description of a preferred embodiment of the invention will constantly refer to the figures of the drawings, figure 1 of which shows a functional block diagram of the internal architecture of the invention, reflecting the data flow in the circuit structured in the following manner:

High rate path (1) which carries a flow of ATM cells at a binary rate of 2.5 Gbit/s on 64 parallel wires comprises the following blocks: Input receiver (4), high rate input queue (5), cell insertion block (6), cell filtering and extraction block (7) and output transmitter (8).

Low rate path (2), which carries a flow of ATM cells at up to 622 Mbit/s, also on 64 wires comprises the following blocks: low rate path intermediate or buffer queues (9), external memory interface (10) and low rate interface (11).

Control and auxiliary blocks (3) are the following: access control to the common medium (12), cell identification block (13), microprocessor interface (14), clock generation (15) and trial control (16).

Below is described in detail the operation of each block. All internal programming and statistics logs of the AMDA are accessible through its microprocessor interface (14).

Data units assembled or extracted by the AMDA are ATM 53 octet cells with any of the two standard structures defined by recommendation UIT-T 1.361 of the standards section of the International Telecommunication Union, (UIT-T): the format of the user-network interface and the format of the network node interface, or 54 octet cells, with the specifications of UTOPIA level 1 (version 2.01) and level 2 (version 0.9) of the ATM Forum, which allow an interface with 16 parallel wires.

At high rate interfaces (17) and (18) cells are transported on 16 wires with a 155.52 MHz clock (binary rate of 2,488.32 Mbit/s, which corresponds to rates of STM-16 type frames of the synchronous digital hierarchy, recommendation UIT-T G.709) and therefore only the 54 octet format may be used.

At the low rate interface (19) cells are transported on 8 or 16 wires, depending on a programming log of the interface protocol (UTOPIA level 1 or level 2, respectively). In the 8 wire mode cells of 53 or 54 octets may be transported, depending on the value of a programming log, with a clock of up to 33 MHz (maximum binary rate 155 Mbit/s); the 16 wire mode allows transport of 54 octet cells with a 50MHz frequency (maximum binary rate 622 Mbit/s).

64 bit parallel cells are handled internally to reduce the internal operation frequency of the circuit. Each cell consists of seven 64 bit words. The first word contains the cell header. The two (for 54 octet cells ) or three (for 53 octet cells) least significant bits of the first word do not contain valid data.

Transformations from 4 to 53 octets and vice versa of cells between high and low rate interfaces (when 53 octet cells are handled in the latter) are performed implicitly in output transmitter (8) and in low rate interface (11) by conversions between the interface cell format and the internal format. Conversion from 53 to 54 octets (AMDA in multiplexor mode) is performed by adding an octet with an undefined content after the fifth octet of the UIT-T cell, and conversion from 54 to 53 octets (AMDA in demultiplexor mode) by deleting the UDF2 field octet (sixth octet of the UTOPIA cell).

Input receiver (4) is in charge of receiving the data flow of ATM cells (16 parallel bits with a 155.52 MHz clock) through the high rate input bus (17) with a UTOPIA level 1 protocol, of controlling cell integrity, converting these to a 64 bit parallel format, checking for possible parity errors in the cells received, counting erroneous cells, recognising empty cells and extracting certain signals of access request and saturation indication from the cell headers.

Each cell interval may contain information corresponding to a channel or be empty (empty cell) which is indicated by a certain codification of the cell header according to recommendation UIT-T 1.361. The start of each cell is identified by an explicit cell start signal or synchronism, according to the UTOPIA standard of the ATM Forum.

High rate reception interface (17) functionally complies with octet protocol UTOPIA level 1, extended to a clock frequency of 155.52 MHz with positive PECL (Phoney Emitter Coupled Logic) levels. Bus (17) contains ATM input and control signals for the UTOPIA protocol (input and output). If the indication is received through connection (27) that the input queue is full, control signals of the UTOPIA interface are activated in order to interrupt flow of incoming cells in the high rate input bus (17).

Cell integrity control ensures that cells have the correct size (54 octets). Action mechanisms in the event of errors ensure writing of complete cells in the input queue (5), being the following: early synchronism and delayed synchronism. In both cases a cell integrity violation alarm is generated.

- Early synchronism: cell start signal(s) are ignored until the 54 octets of a full cell have been received. Once the entire cell is received the next cell start indication is awaited, ignoring the data received.

-Delayed synchronism: incoming data are ignored until the next synchronism is received.

Input receiver (4) converts incoming data from 16 to 64 bits in parallel, so that internally the circuit operates at a lower frequency. Data transported on 64 wires are written in high-rate input queue (5) through connection (24).

Receiving block (4) checks the parity of incoming cells to detect transmission errors. Parity information is included in the UDF1 field of the cell and calculated over the entire preceding cell adding in modulus 2 the number of ones in each bit position (1 to 8). When a parity error is detected a parity violation alarm is activated. To observe the transmission quality a 24 bit counter is employed, accessible by microprocessor interface (14) which is increased with each erroneous cell. This counter is set at zero when read by the microprocessor and allows counting for a minimum of 2.9 seconds all cells received with erroneous parity.

Recognition of incoming empty cells is carried out by detecting at the headers of said cells the pattern which corresponds to unassigned UNI cells with ATM layer, as in recommendation UIT-T 1.361, that is, those cells with fields VPI, VCI and CLP at zero. Empty cells are not written in the input queue through connection (24) and therefore are not sent to the outputs.

Depending on the value of three header bits of the cell, three signals may be generated, one per bit: access request, prioritary and ordinary, and saturation indication, which are sent to the control module (12) of access to the common medium through connection (25). The bits are obtained from the GFC fields (the four more significant bits in the first header octet) or from the UDF2 (sixth header octet) among all cells (empty and non empty) which arrive through high-rate input bus (17). Bit selection is carried out by three programmable 4 bit logs (one per signal) in order to select one of the twelve (four plus eight) header bits. If a selection log is programmed with a value greater than twelve the corresponding signal is not generated.

High-rate path input queue (5) fulfils two main functions: allowing plesiochronous operation (clocks with the same frequency but with no phase relation) of input and output interfaces (17) and (18) respectively, and storing high-rate cells which arrive at the AMDA input when the flow of output bus (18 ) is stopped by the UTOPIA protocol.

Input queue (5) block contains an internal memory of 49 words of 64 bits which allows storing 7 full cells. When the queue is full connection (27) is activated in order to indicate the receiver that reception of new cells must be interrupted, and thus no more cells will be written in the queue from the input receiver (24), preventing overflow. Activation of connection (27) can be disabled by means of a programming log. In this case cells which are received from the receiving block when the queue is full are lost, generating an overflow alarm per lost cell. The number of lost cells due to overflow is stored in a counter accessible from microprocessor interface (14). When the queue is empty the empty cell indicator is activated by connection (28) for one cell interval, and data sent by block output connection (26) are not valid.

A programmable log (MVCFe) indicates the maximum number of consecutive valid (non empty) cells which can be sent by connection (26), after which even if there are cells remaining in the queue, an empty cell must be sent, which is known as a plesiochronism cell, for which the plesiochronism cell indicator is activated (connection (28)) for one cell interval. If MVCFe=0, the number of consecutive valid cells in connection (26) is not limited.

Cell insertion block (6), while the AMDA operates in multiplexor mode, is the mode in charge of incorporating low-rate traffic (up to 622 Mbit/s) to the high-rate link (2.5 Gbit/s). It works as a selector which, under the indication of Medium Access Control (12) (CAM) through connection (30), selects either cells arriving from intermediate queues (9) through connection (29), when an empty cell is detected which is not the plesiochronism cell, in the high-rate flow (indicated by connection (28)), or selects cells arriving from input queue (5) through connection (26); the selected cells exit through connection (32). When the input queue is selected by connection (26) and connection (28) indicates an empty cell, whether plesiochronous or not, the empty output cell indicator is activated in connection (33). If intermediate queues are selected, through connection (29) , the valid cell is also indicated by connection (33).

Cell insertion block (6) is also in charge of adding a congestion indicator, as explained further below, at the header of cells arriving from intermediate queues (9). Insertion of the congestion indication and selection of cells from intermediate queues can be disabled by corresponding programming logs. When the AMDA operates as a demultiplexor it always selects cells arriving from the input queue (5), and therefore congestion is never indicated.

When the congestion signal is activated, arriving from memory interface (10) block through connection (31), indicating that the low-rate ordinary cell queue in multiplexor mode has exceeded a programmable value, congestion is indicated in the PT field of the cells as follows: Cells with PT=000 or PT=010 are transmitted as PT = 010; Cells with PT = 001 or PT = 011 are transmitted as PT = 011. That is, the congestion bit is activated (second PT bit) in user cells (PT=0xx). For maintenance cells (PT=lxx) the PT is never altered.

Cell extraction block (7), when the AMDA operates in demultiplexor mode, is the module in charge of extracting low-rate channel traffic (up to 622 Mbit/s) from the high-rate link (2.5 Gbit/s). Under the indication of cell identification block (13) through connection (34), it writes cells which arrive from insertion block (6) through connection (32) in intermediate queues (9.3) by connection (35), as long as they are not empty cells, which is indicated by connection (33) arriving from the insertion block. Through connection (34) is also received the indication on whether the cell must be propagated or not. If it must be transmitted, or if the cell is empty, which is indicated by connection (33), empty output cell indicator (connection (36)) is activated, which will make the output transmission block (8) replace the header of the cell it receives through connection (32) with an empty cell in its output.

Additionally, cell extraction block (7) contains a pair of counters for obtaining statistical measurements, both in the multiplexor and demultiplexor modes, of the cell flow in the high-rate link (connection (32)). Both the counters and the cell extraction may be disabled by programming logs.

Statistical measurement functions on high-rate link cell flow are performed in several stages: obtaining the cell identifier, comparing this identifier to a value, taking the mask into account, and increasing a counter if the two (identifier and masked value ) agree. The output identifier, Idc of 13 bits, is obtained as in recommendation UIT-T 1.361, taking a set of consecutive bits from the header VPI and VCI fields, starting with the least significant bit. Bit selection is carried out by two four bit programmable logs, SVPIEc and SVCIEc, and a mode selection programmable log (UNI or NNI according to recommendation UIT-T 1.361) of one bit, SNNIEc. The SVPIEc least significant bits of the address, up to 8 or 12 depending on SNNIEc, are taken from the VPI and the remaining SVCIEc, up to 13 from the VCI. The unused bits of the VPI and Vci fields must be zero. If this condition is not met a 16 bit counter is increased, indicating cells with invalid addresses. It must hold that:
L≤ SVPIEc ≤ 8 or 12 (UNI or NNI cells respectively)
0 ≤ SVCIEc ≤ 12
SVPIEc + SVCIEc ≤ 13

For each non empty cell the identifier (Idc) is compared to the value contained in a programmable log (13 bit DrEc) taking into account a validation mask contained in anther log (13 bit MsEc). If MsEc [i] = 1, it compares Idc[i] and DrEc[i], if MsEc [i] = 0 they are not compared and Idc[i] = DrEc[i] is assumed. If all Idc and DrEc bits agree (taking the mask into account as mentioned before) the statistical counter is increased. The size of this counter is 24 bits, which allows to count a minimum of 2.91 seconds without overflowing for a binary rate of 2.5 Gbit/s.

Both the invalid address cell counter and the statistical counter can be accessed by the microprocessor interface (14) and are set at zero when read.

The output transmission block (8) is in charge of inserting access request signals and saturation indication signals in the cell headers, of generating empty cell headers, calculating parity for transmission error control and inserting it in the UDF 1 field of the header, and of converting the internal 64 bit format to the external 16 bit format at 155 Mbit/s, functionally providing an output interface as in UTOPIA level 1 specifications.

Access request signals (ordinary/prioritary) and saturation signals arriving from the CAM (12) through connection (37) may be inserted when the AMDA operates in demultiplexor mode in any bit of the GFC field (four more significant bits of the first header octet) or the UDF2 field (sixth octet of the header). Bit selection is carried out by three programmable 4 bit logs (one per signal) in order to select one of the twelve (four plus eight) header bits. If a selection log is programmed with a value greater than twelve the corresponding signal is not inserted.

When an empty cell indication is received through connection (36) at output transmitter (8), an empty cell is sent through high-rate interface (18). Said cells are identified by inserting in their header the pattern which corresponds to unassigned UNI cells with ATM layer as in recommendation UIT-T 1.361 (values of fields VPI, VCI and CLP equal to zero).

In field UDF1 of cells transmitted by transmitter block (8) parity information is included calculated on the preceding cell transmitted (empty or not). The calculation is performed by adding in modulus 2 the number of ones in each bit position (from 1 to 8). Parity is calculated after inserting the access request and saturation signals and generating the header for empty cells.

Dually and inversely to the conversion carried out in receiver module (4), the internal 64 bit format of the incoming data is converted through connection (32), once the parity is inserted, to the 16 bit format of high-rate transmission UTOPIA interface (18).

Intermediate buffer queues (9) of the low-rate path contain several internal buffer memories which act as intermediate data stores, and which are organised as queues, so that the first written data is the first one that is read. These intermediate queues are required because the external memory, in which low-rate connection cells are stored, cannot be accessed directly from neither the high-rate path blocks (6,7) nor from the low-rate interface (11), nor from CAM (12), as it requires a certain reading and writing protocol, and in addition operates under a different clock as said blocks. Memory interface (10) block is in charge of protocols, transferring data from the intermediate storage buffer queues and the external memory. The intermediate queue (9) block contains the following sub-modules:
- Intermediate queue (9.1) for low-rate interface cells, meant to decouple clocks from external memory interface (10) and low-rate interface (11). It contains a double port internal memory with 21 words of 64 bits which can store three full cells. When the circuit operates in multiplexor mode data are written in the memory from low-rate interface (11) through connection (38). If the identification module, through connection (34) indicates that the cell must not be written, it is lost, in other words it is not written in the queue. When a full cell has been written, a new cell indication is sent to the CAM (12) by connection (51) together with its priority (obtained from connection (34)). Reading is performed once there is at least one full cell stored in the queue from external memory interface (10) by connection (39). In demultiplexor mode data are written, if the queue is not full, from external memory interface (10) through connection (40) and are read, if the queue is not empty, from low-rate interface (11) by connection (41). The filling status of the queue (empty/full) is indicated in both modes by connection (46).
- Intermediate queue (9.2) of access requests and priorities counter, meant to decouple the clocks of the (CAM) access control module (12), identifier module (13) and external memory interface (10) when the circuit operates in multiplexor mode. It contains an internal double port memory of three 17 bit words which can store three counters and three priorities. Each time a new cell received by low-rate interface (11) is stored in intermediate cell queue (9.1), indicated by connection (51) the corresponding access request counter (ordinary or prioritary) is written by connection (44) from CAM (12), together with the priority of the cell supplied by connection (34) from identification module (13). Each time a dell is read from intermediate queue (9.1) from the memory interface through connection (39) the cell priority and the associated access request counter are in the first position of intermediate queue (9.2) and are read by connections (49) and (39) respectively. In demultiplexor mode this queue is disabled.

Intermediate cell queues (9.3) of interface with the high-rate link, meant to decouple clocks of insertion block (6) in multiplexor mode or of extraction block (7) in demultiplexor block and external memory interface (10). The block contains a double port internal memory with 42 words of 64 bits, capable of storing 6 full cells. In multiplexor mode the memory is divided into two identical sections, one for prioritary cells and another for ordinary cells, so that these are two cell queues which are written, if they are not full, from the interface with external memory through connection (42) and read from the insertion block by connection (29) in order to add them to the high-rate flow. When reading occurs from the insertion block, if there are any prioritary cells in the internal memory of intermediate queue (9.3) these are read before ordinary ones. In demultiplexor mode cells arriving from the high-rate flow are written from extraction block (7) through connection (35) and are read, as long as the queue is not empty, from the external memory interface by connection (43) to be stored in the external memory by memory bus (20). In this case there are no separate queues for prioritary and ordinary cells and reading rate is greater than writing rate, so that the queue is never filled. The filling status of the queues (empty/full) is indicated in both modes by connection (47).

- Intermediate countdown or priority counter queue (9.4), meant to decouple clocks of memory interface (10) and medium access control module (12) when the circuit operates in multiplexor mode or identification module (13) in demultiplexor mode. It contains an internal double port memory with 6 words of 16 bits, which can store 6 counters or 6 priorities as described below. In multiplexor mode, the memory is divided into two equal sections, one for prioritary counters and another for ordinary counters, so that there are two counter queues. Each time a cell is written from the memory interface in one of the intermediate cell queues (prioritary and ordinary) of high-rate interface intermediate queue (9.3), the associated access request counter is then written by connection (42) in corresponding countdown counter queue (9.4). This queue is read from the CAM through connection (45) as long as it is not empty; if there are prioritary cells in the internal memory of intermediate queue (9.4) these are always read before ordinary ones. The filling status (empty/non empty) of the memory of said queue (9.4) and the type of cells it contains is indicated by connection (52). In multiplexor mode the memory is not divided. When a cell is written from extraction mode in intermediate queue (9.3) of interface to the high-rate link, indicated by connection (50), the priority of said cell, present in connection (34) is written in priority queue (9.4). When a cell is read from queue (9.3) from memory interface (10) its priority is read from queue (9.4) through connection (48).

External memory interface (10) is in charge of distributing and controlling writing to a static and synchronous high-rate external memory (SSRAM) accessible in bursts. The memory used in the preferred embodiment is Micron MT58LC32K32/36C5-D8 or equivalent. In addition it generates filling level signals and overload alarms.

The external memory comprises the massive cell storage means of the AMDA. A Micron MT58LC32K32/36C5-D8 has a capacity of 32,768 words of 32 bits, so that it can store up to 2048 cells as each cell occupies 14 words of 32 bits and cells are aligned in addresses which are multiples of 16 (512 bits per cell). Nevertheless, the AMDA is capable of accessing an external memory of up to 262,144 words (18 address bits), so that up to 5 memories such as the above could be connected, for a total storage capacity of up to 16,384 cells. The maximum operation frequency (reading or writing) of these memories is 110MHz. The data and addresses bus of access to the memory are multiplexed, as the memory contains internal address logs.

The memory is divided into two sections, one for prioritary cells and another for ordinary cells. From a logical point of view it behaves as two queues which are never accessed simultaneously. The size (PSIm, OSIm) and thresholds (ThPIm, YhOlm) of each section can be programmed by logs accessible from the microprocessor interface (14). The filling level of both queues can be queried through this interface as well.

Since the external memory used has a single port, at each time it is only possible to have one access, either writing or reading. Therefore, there will be two processes, one of writing in the external memory and one of reading the external memory which compete for access to a common resource (the memory) and a control mechanism which distributes access.

In multiplexor mode the cells are written in the external memory arriving from intermediate queues (9.1) and (9.2) and are read towards intermediate queues (9.3) and (9.4). The memory bandwidth must be sufficient to allow both processes to access the memory with a binary rate of 622.08 Mbit/s, as this is the maximum rate of the low rate connection cells (cells enter the first queue (9.1) of the low rate path at this rate in multiplexor mode). That is, the total memory access bandwidth (reading and writing) in multiplexor mode must be 1,244.16 Mbit/s.

In demultiplexor mode cells are written in the memory arriving from intermediate queue (9.3) and are read towards intermediate queue (9.1). The reading process must be able to access at 2,488.32 Mbit/s and the reading one at 622.08 Mbit/s, as although the low rate connections rate is 622.08 at most, cell bursts may arrive at the rate of the link (cells arrive at the first queue (9.3) of the low rate path in demultiplexor mode at 2,488.32 Mbit/s). The total memory access bandwidth (reading and writing) in demultiplexor mode must therefore be 3,110.40 Mbit/s.

In order to increase the reading and writing bandwidth, memory accesses are performed in bursts. An internal memory counter generates up to four successive addresses in each burst. To simplify control, full cells are read and written in external memory accesses.

Reading of cells from low rate path queues (9) and their writing on the external memory through memory bus (20) is performed by burst accesses. Writing of a full cell implies four bursts and a total of 18 memory clock cycles. Each cell is written, according to its priority, in a different memory address range.

As in the previous case, reading of cells of the external memory through memory bus and writing on low rate path queues is performed by bursts. Reading of a full cell implies four bursts and a total of 26 memory clock cycles. Each cell is read in a different memory address range depending on whether it is ordinary or prioritary.

The external memory is a resource shared between the reading and writing processes. Its distribution depends on the operation mode of the AMDA.

Considering the number of reading and writing cycles of each cell it is determined that the minimum operation frequency of the memory for the AMDA in multiplexor mode must be at least 63.85 MHz. As the maximum frequency of the memory clock is 110 MHz, in multiplexor mode the sharing mechanism of the reading and writing processes is performed in equal parts (reading and writing in alternation).

The writing process in multiplexor mode functions as follows: if low rate intermediate queue (9.1) is not empty, which is indicated by connection (46), the first cell of said queue is read with its associated counter, the first one of intermediate queue (9.2), through connection (39) and is written in the external memory in the corresponding area by its priority, which is also obtained from the first word of intermediate queue (9.2) through connection (49).

The operation of the reading process with the circuit operating in multiplexor mode is such that, as long as there are prioritary cells in the external memory and the prioritary section of the high-rate link interface intermediate queue (9.3) is not full, the first prioritary cell and its associated counter of the external memory are read and written in the prioritary cell section of intermediate queue (9.3) and in the prioritary counter section of intermediate queue (9.4) of countdown counters respectively. Otherwise, i.e. if there are no prioritary cells in the external memory or if the prioritary cell section of queue (9.3) is full, an analogous process is followed for ordinary cells. That is, while there are ordinary cells in the external memory and ordinary intermediate queue (9.3) is not full, the first ordinary cell and its associated counter of the external memory are read and they are written in ordinary intermediate queue (9.3) and in ordinary countdown counter queue (9.4) respectively. The filling status of ordinary and prioritary cells of queue (9.3) of interface with the high-rate link is indicated by connection (47), the external memory is read by memory bus (20) and writing in queues (9.3) and (9.4) is through connection (42).

In multiplexor mode the minimum operation frequency must be at least 141.83 MHz, which is greater than the maximum operation frequency of the memory (110MHz), but it is possible to write in the memory those cells arriving from the high-rate link at 2,488.32 Mbit/s. The minimum operation frequency for writing cells at such binary rate is 103.68 MHz. Therefore, it is not possible to read and write cells in the external memory when there are bursts in the high-rate link, but it is possible to store these bursts in the external memory without cell losses. For this, in demultiplexor mode control is assigned to the writing process whenever high-rate link interface queue (9.3) is not empty, so that said queue never overflows, and only hen it is empty is the reading process activated.

The writing process with the circuit in demultiplexor mode operates so that when high-rate link interface queue (9.3) is not empty, indicated by connection (47), the first cell of said queue is read by connection (42) and is written in the external memory, in the area corresponding to its priority, which is read from the first position of queue (9.4) by connection (48).

The operation of the reading process with the circuit operating in demultiplexor mode is such that, as long as the high-rate link interface intermediate queue (9.3) is empty, while there are prioritary cells in the external memory and intermediate low-rate interface queue (9.1) is not full (indicated by connection (46)), the first prioritary cell of the external memory is read through bus (20) and written in queue (9.1) through connection (40). If there are no prioritary cells in the external memory the same process is followed for ordinary cells, that is, if there are ordinary cells and intermediate queue (9.1) is not full, the first ordinary cell of the external memory is read and written in intermediate queue (9.1).

External memory interface (10) block generates filling level signals (connection (31)) of queues in external memory: sections (of ordinary or prioritary cells) full, empty or with thresholds exceeded. Activation of full prioritary section (queue) signals and full ordinary cell section signals can be disabled be corresponding programming logs. The number of cells stored in any section may be queried at any time through the microprocessor interface.

The exceeded threshold signal in the ordinary cell section (in connection (31)) has the particular meaning of overload (saturation in demultiplexor mode and congestion in insertion mode). When activated, an overload input alarm is generated. When the filling level again is reduced and no longer exceeded the threshold another overload output alarm is generated.

Low rate interface (11) carries out the function of ATM layer tail of a bi-directional interface compatible with the UTOPIA specification of the ATM Forum (interface between ATM and physical layers, as in recommendation UIT-T 1.361), allowing a maximum binary rate of 622 Mbit/s. The operation mode can be selected by a programmable log (ModeSx) between UTOPIA level 1 (a single physical layer) and level 2 (several physical layers). When the AMDA operates in demultiplexor mode it carries out the function of the ATM element in the transmission interface; in multiplexor mode it carries out the function of the ATM element of the UTOPIA receiving interface.

**(Table 1:**

| Low rate interface programming) | | | |
|---|---|---|---|
| Mode Sx | Bus (19) data bits | Maximum bus clock frequency | Cell size |
| 0 | 8 | 33 MHz | 53/54 octets |
| 1 | 16 | 50 MHz | 54 octets |

In UTOPIA level 1 mode the octet protocol is complied with both in transmission and reception; in this way compatibility is assured with elements of the physical level with both octet and cell protocol; in addition, depending on a programmable log it can manage 53 or 54 octet cells. When it operates in UTOPIA level 2 mode up to 31 physical layer circuits may be connected to the low rate bus (19). The number of physical layer circuits is indicated by a programmable log (NPHYSx 5 bits).

This module is also in charge of converting the input/output format of the low rate interface (in 8 or 16 wires) to the internal 64 bits in parallel data format.

With interface (11) in receiving mode (AMDA circuit in multiplexor mode), cells received through low rate bus (19) with UTOPIA protocol are converted to 64 bits in parallel, written through connection (38) in intermediate queue (9.1), assuring cell integrity, that is, full cells are always written in the queue. If through connection (31) is received an indication that one of the queues in the external memory is full, control signals of the UTOPIA interface are activated (in the low rate bus (19)) to interrupt the flow of incoming cells through bus (19) and prevent overflow of the queues. In UTOPIA level 2 mode the selection algorithm for the physical layer attended in the preferred embodiment is the following at each time:

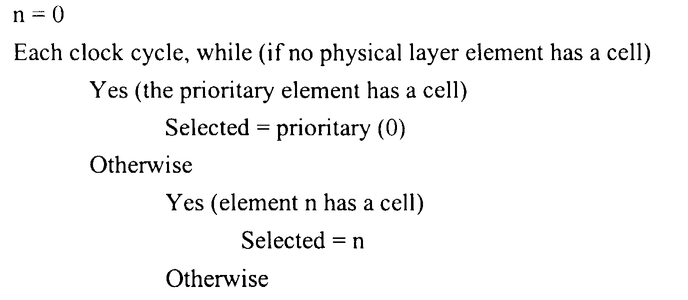

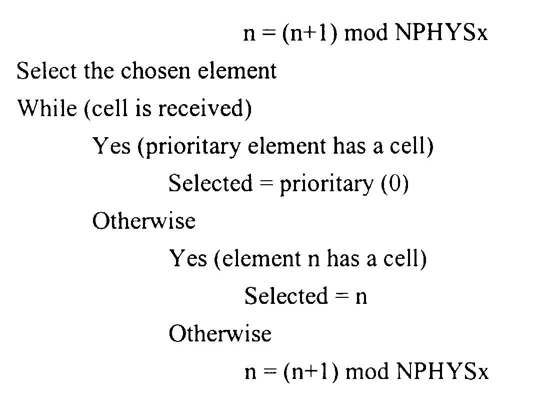

In this case a dedicated connection is provided available for a prioritary element of the physical layer, and another for non prioritary elements (up to 30) among which a query and selection protocol is performed cyclically. To simplify control of the interface the address of the prioritary physical layer element is set as 0 and non prioritary physical layer elements have consecutive addresses from 1 to the value indicated by the NPHYSx programming log.

With interface (11) in transmission mode (AMDA circuit in demultiplexor mode) when indication is received through connection (46) that intermediate queue (9.1) is not empty (contains at least one full cell), the first cell of this queue is read and after converting it to the output format (8/16 bits) it is outputted through low rate bus (19), complying with UTOPIA protocol (level 1 or 2). In UTOPIA level 2 the NPHYSx physical layers connected to bus (19) have the same priority and are assigned according to the cyclical query algorithm, similar to that described above but with no prioritary element.

When the integrated circuit operates in multiplexor mode, Medium Access Control (CAM) block (12) is in charge of arbitrating access to the high rate link controlling cell insertion block (6) and generating access requests to the high rate link. It is also in charge , both in multiplexor and demultiplexor modes, of managing access control signals of bus (21).

The Distributed Algorithm for Access to the Medium (ADAM) is a distributed control mechanism, which requires each AMDA to receive control information (access requests, saturation status) from other link nodes. Transport of this information by dedicated wires is costly, as the nodes may be physically distant. Thus, the AMDA allows to bundle the control information of the ADAM algorithm in unused bits (UDF2 and GFC) of the cell headers. In this manner, by means of a suitable network configuration dedicated wires are not required to transport control signals between nodes.

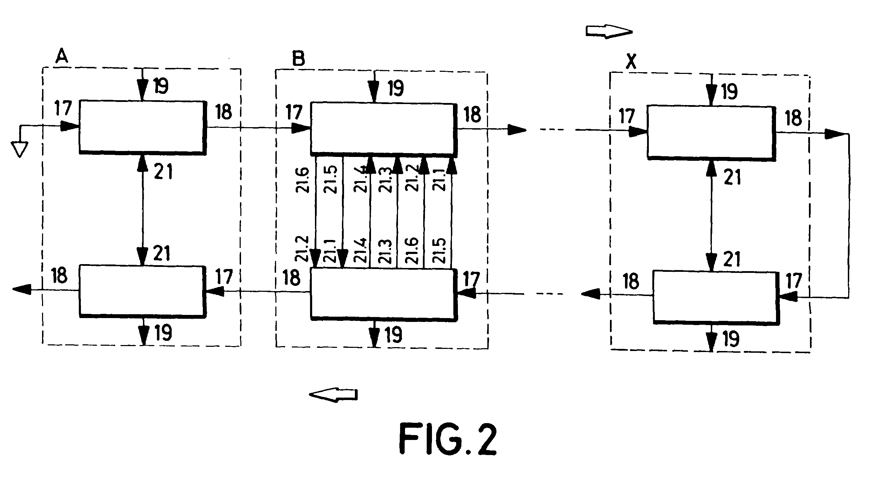

Each node of the high rate link or network consists of two integrated AMDA circuits, one of which operates in multiplexor mode, adding node traffic to the link, and the other in demultiplexor mode, extracting traffic to the node from the link. High rate ATM traffic between multiplexors flows in the opposite direction to traffic between the demultiplexors, as explained below. Order relationships (first, last, previous, next) between multiplexors and demultiplexors respectively are set by the direction of flow of high rate ATM traffic in them. At each node of the link high rate output (18) of each multiplexor is connected to the high rate input (17) of the following multiplexor. Demultiplexors are connected in the same way. The input (17) of the first multiplexor of the network is earthed, which means that it constantly receives empty cells in its high rate input, and at the output of the last multiplexor is connected the input of the first demultiplexor. Link access control buses (21) are connected between the multiplexor and demultiplexor of each node, as shown in figure 2.

Control bus (21) contains several signals whose function (and the direction of input/output in some of them) depends on the programming mode of the AMDA.

In multiplexor mode signals (21.1) and (21.2) are inputs for ordinary and prioritary access requests respectively for the medium access control algorithm. Signals (21.5) and (21.6) are the outputs of ordinary and prioritary access requests from the generation process of access requests (outstanding requests counter) of the CAM. Signal (21.3) is the clock input for all of the above signals. Signal (21.4), together with the saturation signal extracted from the incoming cells by high rate input bus (17) arriving from receiver (4) through connection (25) are the saturation indication inputs for the CAM control algorithm. If either of these two signal is activated the saturation signal of connection (37) is also activated, which travels towards transmitter (8) so that it inserts the saturation indicator in the header of cells leaving through high-rate output bus (18).

In the demultiplexor mode the CAM algorithm operation is deactivated, so that the function of the block is basically to path signals towards other blocks. Access request inputs (21.1) and (21.2) are sent to output transmitter (8) through connection (37) to be inserted in the header of cells transmitted by high rate output bus (18). Prioritary and ordinary access requests extracted from cell headers received by input bus (17) at receiver (4) and sent to the CAM by connection (25) leave through connections (221.5) and (21.6). The saturation indication received by connection (25), also extracted by the receiver of cell headers received by input bus (17) (saturation of preceding demultiplexors), together with the saturation signal of the external memory of ordinary cells (local saturation), received from external interface (10) block by connection (31), indicate the saturation status which exits through connection (21.4). The saturation status is also sent to transmitter (8) by connection (37) to be inserted in the headers of cells leaving through high rate bus (18). There is a programming log which disables saturation indication (37) of the preceding demultiplexors, so that in the cells leaving through bus (18) and in connection (21.4) only the local saturation status will appear (this function is activated in the first network demultiplexor). Signal (21.3) is the clock output of previous signals of high rate link access control bus (21).

The control algorithm employed, known as ADAM (Distributed Algorithm for Access to the Medium) is an improved evolution of the DQDB algorithm (Distributed Queue Dual Bus) of the IEEE with changes which make the algorithm behave as an algorithm which attends the first requests first, while the original DQDB behaves as a cyclical query algorithm. In addition, it considers two priority levels so that prioritary cells are processed before ordinary cells. It also takes into account the filling level of demultiplexor queues in the network (saturation), so that when they exceed a certain threshold ordinary cells are not inserted in the high rate link. This is a distributed control method which minimises delays and therefore queue size, and its independent variation of the position of the circuit in the network, making all AMDA's have an equal probability insertion in the traffic link arriving from its low rate interface.

The implementation of the control algorithm ADAM used which has already been described in a generic manner, contains three pairs of counters and a status machine for cell insertion process control. The states of the machine are "resting" "ordinary" and "prioritary". Resting status indicates that there are no cells in the high rate interface queue (9.3) ready to be transmitted by insertion block (6), ordinary status indicates that there are ordinary cells in said queue but no prioritary cells, and prioritary status indicates that there are prioritary cells in the queue, with ordinary cells either present or absent.

In any status ordinary and prioritary access request counters increase each time a new access request is received by connection (21.1) and (21.2) respectively. When an indication is received from connection (51) that a new ordinary or prioritary low rate cell has been received in intermediate queue (9.1), the value of the corresponding counter and the priority are written in queue (9.2) through connections (44) and (34) and said counter is set at zero. In resting status, each time an empty cell indication is received by connection (28) the ordinary requests counter decreases if it is not zero and if signals (21.4) and (25) do not indicate saturation.

If in resting status an indication is received through connection (52) that an ordinary cell and its associated access request counter are available in queues (9.3) and (9.4) the status becomes ordinary. Queue (9.4) is read through connection (45) and the datum read is loaded in the ordinary countdown counter. Said counter decreases with each empty cell indication received by connection (28) if there are no outstanding prioritary requests and signals (21.4) and (25) do not indicate saturation. When the counter reaches zero, insertion block (6) is indicated by connection (30) to replace the following empty cell with the first ordinary cell of queue (9.3). Once the cell is transmitted if connection (52) indicates that there are no more ordinary cells with their associated counters, queues (9.3) and (9.4) return to resting status. If there arc cells remaining the ordinary status remains and the above process is repeated.

If in ordinary or resting status an indication is received from connection (52) that a prioritary cell and its associated counter are available in queues (9.3) and (9.4) the status becomes prioritary, with a similar operation as the ordinary status. Queue (9.4) is read through connection (45) and the datum read is loaded in the prioritary countdown counter. Said counter decreases with each empty cell indication received by connection (28) until it reaches zero, at which time the insertion block is indicated by connection (30) to replace the following empty cell with the first prioritary cell of queue (9.3). Once the cell is transmitted if connection (52) indicates that there are no more prioritary cells with their associated counters, the resting status is regained. If there are no prioritary cells remaining but there are ordinary cells, the ordinary status is recovered, and if there are prioritary cells the prioritary status is maintained and the above process is repeated.

In any status outstanding ordinary and prioritary access request counters increase with each clock (21.3) cycle if inputs (21.1) and (21.2) respectively are activated. They also increase with each new ordinary or prioritary low rate cell indicated by connection (51). They decrease if different from zero with each clock cycle, activating with each decrease of outputs (21.5) and (21.6). The access request generation process operates independently from the control process of cell insertion of the status machine. Once an outstanding request counter is increased the request will be sent regardless of whether the corresponding cell has been transmitted.

Cell identification block (13) is in charge of identifying cells arriving from the high rate input in demultiplexor mode and those arriving from the low rate interface in multiplexor mode. Additionally, it can carry out a selective discarding process of cells in each channel to which they belong, which depends on the filling level of the external memory, cell priority and the status of each channel. It also maintains a set of counters for obtaining statistical measurements of cell flow. It contains an internal memory of 8,192 words of 6 bits, which can be read and written through the microprocessor interface, in which the following cell identification table (or channel identification table) is programmed:

| Bit | Name | Description |
|---|---|---|
| CPS[5] | P | Transmits cell in high rate link |
| CPS[4] | E | Extracts cell to low rate queues |
| CPS[3] | CP | Cell priority level |
| CPS[2] | LP | Cell loss level |
| CPS[1] | D | Enabling of selective discarding |
| CPS[0] | S | Status of channel selective discarding |

ATM cells are identified by 13 bits extracted from VPI and VCI fields of the cell header in a manner similar to that described in the statistical counter of the extraction block. In demultiplexor mode high rate path cells are identified and in multiplexor mode incoming low rate cells are identified.

The 13 bits which identify the channel to which each cell belongs are used as an access address to a cell identification table of 8,192 positions each of which contains a 5 bit word, CPS [5..0] for channel programming, which indicates the filtering required on the cells, their priority and status of the channel to which they belong according to the previous table.

The two more significant bits (CPS [5..4]) are only meaningful in demultiplexor mode. The P bit indicates whether the cell is transmitted (P=1) or not (P=0) in the extraction module (7). Bit E indicates whether the cell must be extracted (E=1) or not (E=0) towards the low rate queues.

If a cell is written or not in the corresponding low rate queue depends on the service quality of the channel to which it belongs, on the filling status of the external memory queues and on the selective discarding status of the channel. In demultiplexor mode it also depends on bit E.

The service quality of a channel is determined by two parameters, the priority level (CP) and the loss priority (LP) which determine four service qualities. The priority level determines whether a cell belongs to a low priority channel (CP=0) or a high priority channel (CP=1). Each of these types of channel are processed independently, storing their cells in different queues of the external memory. The loss priority determines for each type of channel defined by CP if the cells are lost (LP=1) when the number of cells stored in the corresponding section (ordinary / prioritary) of the external memory exceeds a programmed threshold or if they are only lost when said section is full (LP=0). The filling status of the external memory is received from the memory interface block through connection (31). The block contains four 16 bit counters accessible from the microprocessor interface which count the number of cells lost (in all channels) for each service quality.

The two least significant bits CPS[1..0] of the channel programming word are related to selective discarding. Bit D indicates whether it is enabled (D=1) or disabled (D=0), bit S indicates activated discarding (S=1) or disactivated discarding (S=0) of the channel. Selective discarding implies that once a cell is lost in a bundle the remaining cells of the bundle must be rejected. The end of a bundle is indicated by the PT field of cell headers by the values PT=001 or PT=011. Each time a cell is received the entry corresponding to the cell identifier in the connections programming table is checked. F bits D and S are activated (value 1) the cell is lost. Bit S is activated when, due to the filling state of the queues a cell is lost from a channel, and it is disactivated when a cell is received from the same channel with the bundle end indicator (PT=0x1). The bundle contains a 16 bit counter accessible from the microprocessor interface which counts the number of lost cells (in all channels) due to selective discarding).

Depending on the service quality of the channel to which the cells belong, on their selective discarding status, on the occupation status of the external memory queues received from memory block interface (10) by connection (31) and on bit E in demultiplexor mode, it is decided whether cells are written on low rate queues (9). This writing indication together with the cell priority (CP) and (only for demultiplexor mode) whether it must be propagated (P) are sent through connection (34) to queues (9.1) and (9.2) in multiplexor mode and to queue (9.4) and extraction block (7) in demultiplexor mode.

Statistical counters operate in a manner analogous to those of extraction block (7). They can be read from the microprocessor interface and are set at zero when read. The programming word of the channel to which the cell belongs CPS[5..0], together with the two additional explicit service quality bits make up the identifier for the statistical count ECI [7..0], which is compared to a predefined pattern contained in a programmable 8 bit log, ECPId [7..0], taking into account an 8 bit validation mask contained in another log, EMCId [7..0]. If EMCId [i] = 1 it compares ECI [i] and ECPId[i]. If EMCId [i] = 0 they are not compared and ECI [i] = ECPId[i]. If all bits of ECI and ECPId agree (considering the mask as mentioned above) the statistical counter is increased. The size of this counter is 24 bits.

If the cell identifier is not valid according to recommendation UIT-T 1.361, as described in statistical counter of extraction block (7), a 16 bit invalid address cell counter is increased.

Interface (14) to the microprocessor is in charge of communication with microprocessors of the 680x0 family through asynchronous interface bus (22). It allows programming the different modes of operation and obtaining statistical measurements by accessing internal logs of the AMDA integrated circuit. Likewise, it manages the block alarms by a masked interruption system. Block (14) contains internally an 8 bit interruption status log which may be read by the microprocessor, in which is maintained the status of each circuit alarm. It also contains an 8 bit interruptions mask log programmable from the microprocessor, which enables or disables each alarm. When an alarm occurs, if it is enabled the block activates the interruption signal in microprocessor interface bus (22).

Clock generation block (15) is in charge of generating the different internal operation clocks of the AMDA integrated circuit from the main system clock, input connection (23), and of generating start signals for all blocks synchronised with said clocks from the external start signal (23) and the circuit warm start signal. The warm start signal is given by the value of a programmable 1 bit log contained in the block.

Test control block (16) is in charge of generating internal control signals for circuit manufacturing trials and self checking of internal memories. When the test input (53) is activated the circuit enters test mode, with certain values loaded in the circuit internal logs which allow to check for correct operation of its blocks and carrying out self-checking of internal memories. In normal operation (test input disactivated) this block performs no function.

## Claims

1. Integrated circuit for extraction and addition of traffic in asynchronous transfer mode, on a common high capacity link, for use as a traffic concentrator or distributor in wide-band integrated digital services networks (WB-IDSN) or in asynchronous transfer mode (ATM) local or metropolitan area networks, characterised in that it is structured with an architecture comprising a high-rate cell transport and processing section (1), a low-rate cell transport and processing section (2) and a control module (3), with section (1) capable of receiving an ATM cell flow at a binary rate of 2,488.32 Mbit/s at the parallel input interface (17) and, under control of module (3), of extracting ATM cells from said flow towards section (2) or adding cells from section (2) to the flow, one or the other function performed depending on the status of an internal log programmable through microprocessor interface (22), sending the modified flow through parallel output interface (18) at a binary rate of 2,488.32 Mbit/s, where section (2) is capable of sending cells extracted from section (1) or of receiving cells which will be added to section (1), depending on the value of the aforementioned programmable log, through bi-directional parallel ATM interface (19) at a maximum binary rate of 622.08 Mbit/s, as well as temporally storing the cells in an external synchronous and static memory through memory interface (20).

2. Integrated circuit for extraction and addition of traffic in asynchronous transfer mode, as in claim 1, characterised in that high rate cell transport and processing section (1) is structured according to a block diagram comprising an input receiver block (4) in charge of checking the integrity of the cells it receives, converting them to the internal format of 64 bits in parallel, checking for parity errors, counting erroneous cells, recognising empty cells and extracting access requests and saturation indication signals from the cell headers, a cell queue (5) in charge of storing high rate cells to allow a plesiochronous operation between cell input and output in this section, a cell insertion block (6), which incorporates low rate traffic to this section, a low rate cell extraction block (7) and a cell transmission block (8) in charge of inserting the access request and saturation indication signals in the cell headers, of generating empty cell headers, calculating parity for control of transmission errors and of converting the internal 64 bits in parallel format to the external 16 bits in parallel format at 155.64 Mbit/s.

3. Integrated circuit for extraction and addition of traffic in asynchronous transfer mode, as in claim 1, characterised in that low rate cell transport and processing section (2) is structured according to a block diagram comprising a module of intermediate queues (9) for intermediate data storage, a memory interface (10) block which distributes and controls writing and reading on an external high rate memory, and a low rate interface (11) block which carries out the function of the ATM layer tail of a bi-directional interface compatible with the UTOPIA specification of the ATM Forum.

4. Integrated circuit for extraction and addition of traffic in asynchronous transfer mode, as in claim 1, characterised in that control module (3) is structured according to a block diagram comprising a common medium access control block (12) in charge of arbitrating access to the high rate link if the circuit operates in multiplexor mode, a block (13) for identification of cells arriving from the high rate input in demultiplexor mode and those arriving from the low rate interface in multiplexor mode, a microprocessor interface (14) block in charge of communication with the microprocessor and of managing block alarms by means of a masked interruptions system, a block for clock (15) generation for correct synchronous operation of all blocks and a control block (16) for circuit manufacturing tests and self-checking of internal memories.

5. Integrated circuit for extraction and addition of traffic in asynchronous transfer mode, as in claim 3, characterised in that intermediate queue (9) module is structured according to a block diagram which comprises an intermediate queue (9.1) of low rate interface cells meant to decouple clocks of external memory interface (10) and low rate interface (11), intermediate queue (9.2) of access requests and priorities counters which decouples clocks of access control module (12) and identifier (13) and of external memory interface (10) when the circuit operates in multiplexor mode, a block of intermediate queues (9.3) of high rate link interface cells which decouples clocks of the insertion block (6) in multiplexor mode or extraction block (7) in demultiplexor mode and external memory interface (10), and an intermediate queue (9.4) of priorities or countdown counters which decouples clocks of the external memory interface and access control module (12) when the circuit operates in multiplexor mode, or identification module (13) in demultiplexor mode.

6. Integrated circuit for extraction and addition of traffic in asynchronous transfer mode, as in claim 3, characterised in that memory interface (10) block allows differentiating ATM cells in two different priority levels by accessing two independent external memory sections through memory bus (20) with addresses and data multiplexed in time, establishing the number of cells which may be stored in each section by corresponding logs programmable through microprocessor interface (22), and which allows differentiating, for each cell priority level, two loss priority levels by establishing in each section, by means of corresponding logs programmable through microprocessor interface (22), a threshold number of cells which determines whether the cells can be stored in the external memory or if they are lost when the number of cells stored in the corresponding section is greater than the threshold for said section.

7. Integrated circuit for extraction and addition of traffic in asynchronous transfer mode, as in claim 4, characterised in that control block (12) for access to the common medium is capable of performing the functions of the distributed algorithm ADAM (Distributed Algorithm of Access to a common Medium) with two priority levels, in co-ordination with other integrated circuits as that of this invention, communicating with them through bus (21) for control of access to the high rate link, provided with two incoming access request counter logs, two incoming access request countdown logs and two outstanding transmission access request counter logs, and also provided with a status machine, resting, active and prioritary, for control of ATM cell addition to the flow of high rate cell transport section (1).

8. Integrated circuit for extraction and addition of traffic in asynchronous transfer mode, as in claim 4, characterised in that cell identification block (13) allows differentiation of ATM cells as belonging to 8,192 different connections, containing a connections programming table, the content of which may be read and written through microprocessor interface bus (22), allowing to assign a different priority level and loss priority to each connection
